(19) Europäisches Patentamt
European Patent Office
Office européen des brevets

(11) Veröffentlichungsnummer : **0 498 769 A1**

(12) **EUROPÄISCHE PATENTANMELDUNG**

(21) Anmeldenummer : **92810069.2**

(51) Int. Cl.$^5$ : **C09B 43/32,** C09B 41/00

(22) Anmeldetag : **30.01.92**

(30) Priorität : **07.02.91 CH 383/91**
**07.02.91 CH 384/91**

(43) Veröffentlichungstag der Anmeldung :
**12.08.92 Patentblatt 92/33**

(84) Benannte Vertragsstaaten :
**CH DE FR LI**

(71) Anmelder : **CIBA-GEIGY AG**
**Klybeckstrasse 141**
**CH-4002 Basel (CH)**

(72) Erfinder : **Ruf, Klaus, Dr.**
**Eckstrasse 24**
**W-7801 Bollschweil (DE)**
Erfinder : **Gülec, Bilge, Dr.**
**Fasanenstrasse 140**
**CH-4058 Basel (CH)**
Erfinder : **Reisinger, Michael, Dr.**
**Murackerweg 308**
**CH-4204 Himmelried (CH)**
Erfinder : **Surber, Werner, Dr.**
**Vorderbergstrasse 76**
**CH-4104 Oberwil (CH)**

(54) **Verfahren zur Herstellung von Bisazopigmenten in halogenfreien Lösungsmitteln.**

(57) Verfahren zur Herstellung von Bisazopigmenten der Bis-hydroxynaphthoylamino-benzol- oder der Bis-acetoacetylamino-benzol-Reihe nach an sich bekannten Methoden, dadurch gekennzeichnet, dass als Lösungsmittel 1,2,3-Trimethylbenzol oder Anisol verwendet wird.

EP 0 498 769 A1

Die vorliegende Erfindung betrifft ein Verfahren zur Herstellung von Bisazopigmenten der Bis-hydroxynaphthoylamino-benzol- oder der Bis-acetoacetylamino-benzol-Reihe nach an sich bekannten Methoden, aber unter Verwendung von 1,2,3-Trimethylbenzol oder Anisol als Lösungsmittel.

Bisazopigmente sind schon lange bekannt und Verfahren zu ihrer Herstellung mit den üblichen Kondensationen von Säurechloriden mit Aminen sind in einer grossen Zahl von Publikationen beschrieben, so zum Beispiel in GB-A 1468 435, in der japanischen Auslegeschrift 75-11411, in US Patent 2 936 306 und in US Patent 3 941 768. Die Kondensation wird dabei bevorzugt in chlorierten Lösungsmitteln, insbesondere in o-Dichlor-benzol, wie dies im allgemeinen auch im grosstechnischen Massstab geschieht, durchgeführt. In den obenerwähnten Publikationen wird allerdings ausgeführt und in vereinzelten Beispielen gezeigt, dass auch andere Lösungsmittel, darunter zum Beispiel Toluol und Xylol, geeignet sein können. In der Tat ist es jedoch nie gelungen, mit solchen unchlorierten Lösungsmitteln den heutigen Anforderungen der Technik genügende Resultate zu erreichen.

Es ist nun gefunden worden, dass bei Verwendung von 1,2,3-Trimethylbenzol oder Anisol als Lösungsmittel die obenerwähnte Kondensationsreaktion überraschenderweise unter Beibehalt der geforderten Ausbeute und Qualität der Produkte durchgeführt werden kann.

Die vorliegende Erfindung betrifft demnach ein Verfahren zur Herstellung von Bisazopigmenten ausgewählt aus der Bis-hydroxynaphthoylamino-benzol- und Bis-acetoacetylamino-benzol-Reihe nach an sich bekannten Methoden, dadurch gekennzeichnet, dass als Lösungsmittel 1,2,3-Trimethylbenzol oder Anisol verwendet wird.

Von besonderem Interesse ist ein Verfahren zur Herstellung von Bisazopigmenten der Formel

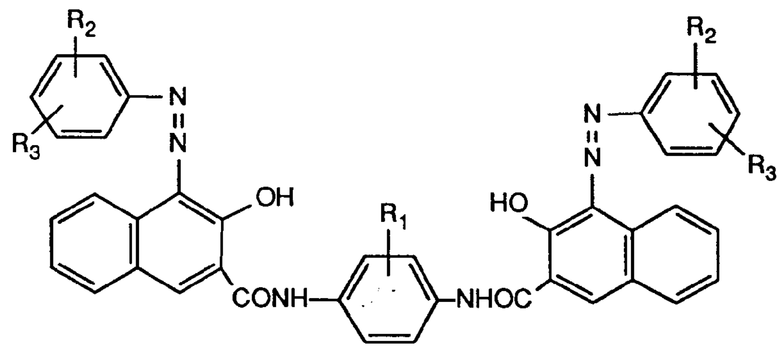

(I),

worin $R_1$ Wasserstoff, Chlor oder Methyl und $R_2$ und $R_3$, unabhängig voneinander, Chlor, Methyl oder Nitro bedeuten,
durch Umsetzung (a) von 2 Mol eines Azocarbonsäurechlorids der Formel

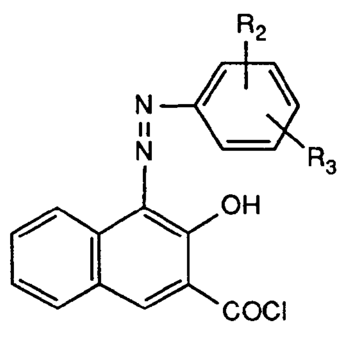

(II),

worin $R_2$ und $R_3$ die oben angegebene Bedeutung haben,
mit 1 Mol eines Diamins der Formel

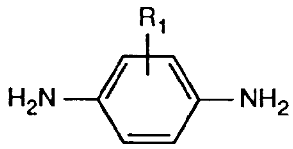

(III),

worin $R_1$ die oben angegebene Bedeutung hat, oder der Formel

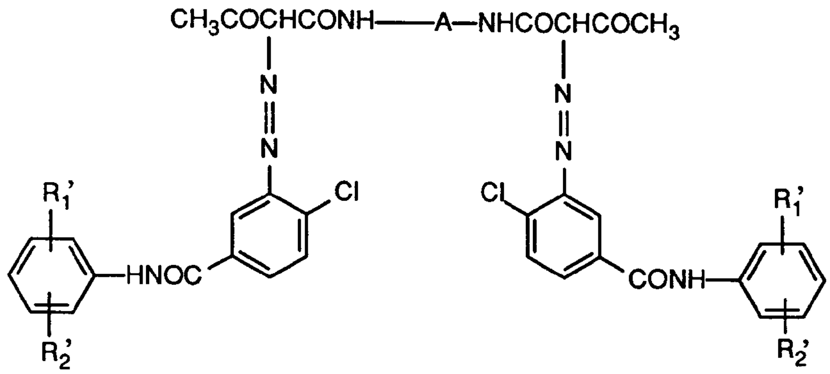

(IV),

worin A eine Gruppe

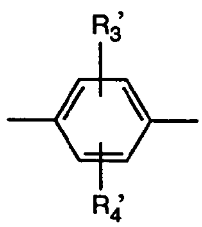

bedeutet,

worin $R'_1$ und $R'_2$ unabhängig voneinander Chlor, Methyl, Trifluormethyl, unsubstituiertes oder durch Chlor, Methyl oder Methoxy substituiertes Phenoxy bedeuten, und $R'_3$ und $R'_4$ unabhängig voneinander Chlor oder Methyl sind,

durch Umsetzung (b) von 1 Mol eines Bis-azocarbonsäurechlorids der Formel

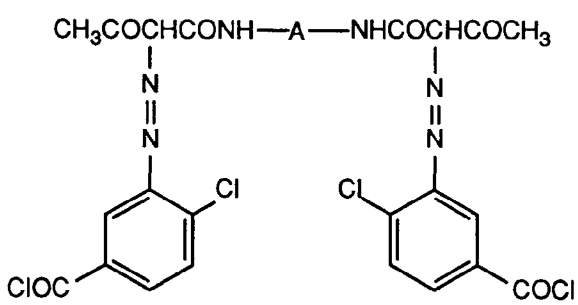

(V),

worin A die oben angegebene Bedeutung hat,

mit 2 Mol eines Amins der Formel

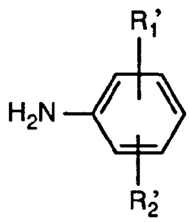

(VI),

worin $R'_1$ und $R'_2$ die oben angegebene Bedeutung haben,
dadurch gekennzeichnet, dass die Umsetzungen (a) oder (b) in Gegenwart von 1,2,3-Trimethylbenzol oder Anisol als Lösungsmittel durchgeführt werden.

Bevorzugte Azocarbonsäurechloride der Formel II sind jene der Formeln

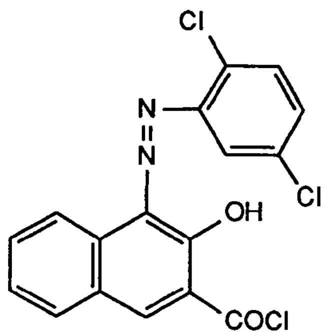

und

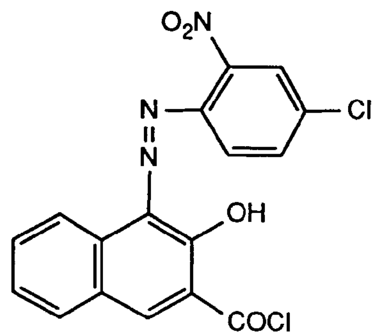

VII VIII

Bevorzugte Diamine der Formel III sind p-Phenylendiamin und 1,4-Diamino-2-chlor-benzol.

Besonders bevorzugt ist die Kondensation des Azocarbonsäurechlorids der Formel VII mit p-Phenylendiamin oder mit 1,4-Diamino-2-chlor-benzol oder des Azocarbonsäurediamids der Formel VIII nut 1,4-Diamino-2-chlor-benzol.

Bevorzugte Bis-azocarbonsäurechloride der Formel V sind jene, worin A eine der Gruppen

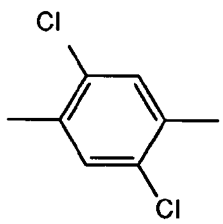

,

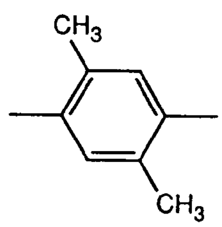

oder

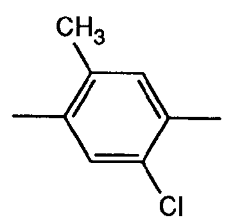

(IX) (X) (XI)

bedeutet.

Bevorzugte Amine der Formel VI sind jene, worin $R'_1$ und $R'_2$ unabhängig voneinander Chlor, Methyl, Trifluormethyl oder p-Chlorphenoxy bedeuten und insbesondere jene der Formeln

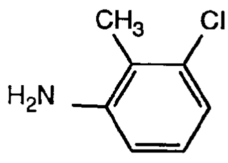

(XII)

,

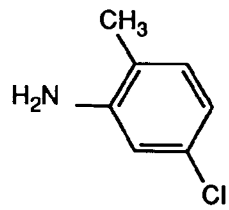

(XIII)

und

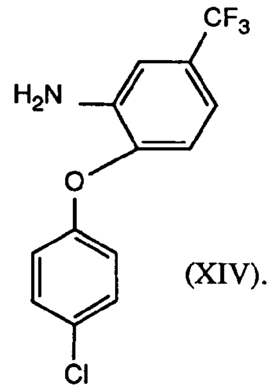

(XIV).

Ganz besonders bevorzugt sind folgende Kondensationsreaktionen:

- Die Umsetzung eines Bis-azocarbonsäurechlorids der Formel V, worin A eine Gruppe IX bedeutet, mit einem Amin der Formel XIII;
- Die Umsetzung eines Bis-azocarbonsäurechlorids der Formel V, worin A eine Gruppe X bedeutet, mit einem Amin der Formel XIII;
- Die Umsetzung eines Bis-azocarbonsäurechlorids der Formel V, worin A eine Gruppe XI bedeutet, mit einem Amin der Formel XII oder der Formel XIV.

Die Azocarbonsäurechloride der Formel II, die Bis-azocarbonsäurechloride der Formel V, die Diamine der Formel III und die Amine der Formel VI sind bekannte Verbindungen.

Abgesehen von der Verwendung von 1,2,3-Trimethylbenzol oder von Anisol, erfolgen die Kondensationsreaktionen nach bekannten und allgemein üblichen Methoden.

Bei der Umsetzung (a) wird zweckmässig bei Temperaturen zwischen 80 und 160°C, bevorzugt zwischen 135 und 145°C, bei einer Dauer von 2 bis 6, vorzugsweise 3 bis 5 Stunden, bevorzugt mit 1,2,3-Trimethylbenzol, gearbeitet.

Bei der Umsetzung (b) wird zweckmässig bei Temperaturen zwischen 130 und 175°C, bevorzugt für Anisol zwischen 135 und 145°C und für 1,2,3-Trimethylbenzol zwischen 150 und 165°C, bei einer Dauer von 8 bis 20, vorzugsweise 12 bis 17 Stunden, bevorzugt mit Anisol, gearbeitet.

Zweckmässig wird bei der Umsetzung (a) die 3- bis 10-fache, vorzugsweise die 5- bis 8-fache Gewichtsmenge 1,2,3-Trimethylbenzol bzw. Anisol, bezogen auf das Azocarbonsäurechlorid der Formel II, eingesetzt, während bei der Umsetzung (b) zweckmässig die 5- bis 20-fache vorzugsweise die 8- bis 15-fache Gewichtsmenge 1,2,3-Trimethylbenzol bzw. Anisol, bezogen auf das Bisazocarbonsäurechlorid der Formel V, eingesetzt wird.

Auch die bekannten, üblichen Vorstufen zur Herstellung des Azocarbonsäurechlorids der Formel II bzw. des Bis-azocarbonsäurechlorids der Formel V, d.h. die Diazotierung des Amins

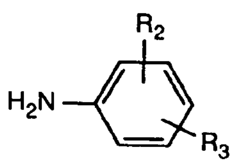

,

bzw. des Amins

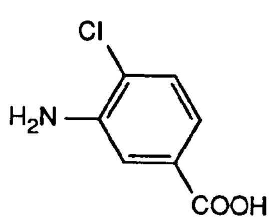

welche vorzugsweise mittels eines Alkylnitrits erfolgt (und selbst die Herstellung des Alkylnitrits), die kupplung mit der 2-Hydroxy-3-naphthoesäure bzw. mit dem Bis-acetoacetylamino-benzol und die Umsetzung der Säure

mit dem Chlorierungsmittel (bevorzugt Thionylchlorid), können vorteilhaft durch Ersetzen der üblichen Lösungsmittel mit 1,2,3-Trimethylbenzol oder Anisol durchgeführt werden. Dabei erfolgen zweckmässig die Alkylnitritbildung (bevorzugt Isopropylnitrit) bei Temperaturen zwischen -30 und 20°C, die Azocarbonsäure- bzw. Bisazocarbonsäuresynthese (kupplung) zwischen 40 und 60°C und die Chlorierung der Säure zwischen 80 und 140°C.

Die nachfolgenden Beispiele erläutern die Erfindung.

Beispiel 1:

In einem 1,5-Liter-Sulfierkolben werden 88 g (1,46 Mol) Isopropanol, 103,6 g (1,5 Mol) Natriumnitrit 100 % und 320 ml 1,2,3-Trimethylbenzol vorgelegt. Nach Zugabe von 440 g Eis sinkt die Innentemperatur auf ca. -20°C. Innerhalb von 15 Minuten lässt man unter Rühren 142 ml (1,45 Mol) Salzsäure (32%ig) zutropfen und 15 Minuten bei -5 bis 0°C ausrühren. Nach Phasentrennung wird die obere Phase (Isopropylnitrit gelöst in 1,2,3-Trimethylbenzol) abgetrennt. Man extrahiert die wässrige Phase mit weiteren 100 ml 1,2,3-Trimethylbenzol. Die gesammelte organische Phase wird für die weitere Reaktion bereit gehalten.

In einem 3-Liter-Sulfierkolben werden zur kupplung 195,0 g (1,2 Mol) 2,5-Dichloranilin (100%ig) 230,0 g (1,222 Mol) 2-Hydroxy-3-naphtoesäure sowie 2000 ml 1,2,3-Trimethylbenzol vorgelegt. Nach Erwärmen auf 45°C wird zu der dünnflüssigen gelben Suspension während 30-60 Minuten bei 45-50°C die obige Isopropylnitrit-Lösung zugetropft. Man spült mit maximal 500 ml 1,2,3-Trimethylbenzol und lässt die dunkle dickflüssige Suspension zwei Stunden bei 45-50°C nachrühren. Unter Vakuum (100 mbar) destilliert man Wasser/Isopropanol und Isopropylnitrit ab bis bei ca. 100°C (100 mbar) reines 1,2,3-Trimethylbenzol destilliert. Nach dem Entlasten der Apparatur und Abkühlen auf Raumtemperatur wird die dunkelrote Reaktionssuspension filtriert. Das Nutschgutwird dann mit 1000 ml 1,2,3-Trimethylbenzol gewaschen. Man erhält ca. 600 g Azocarbonsäure (30 % 1,2,3-Trimethylbenzol-feucht).

In einem 1-Liter-Sulfierkolben werden 72,2 g (0,2 Mol) Azocarbonsäure (100%ig) in 440 ml 1,2,3-Trimethylbenzol bei 80°C vorgelegt. Nach Zugabe von 0,4 ml Pyridin tropft man innert 15 Minuten 25,4 g (0,2132 Mol) Thionylchlorid bei 80-85°C hinzu, erwärmt auf 115°C und lässt eine Stunde bei 115-120°C rühren. Gleichzeitig werden 14,3 g (0,1 Mol) 2-Chlor-1,4-phenylendiamin (100%ig) in 200 ml 1,2,3-Trimethylbenzol bei 65°C in einem Erlenmeyerkolben gelöst. Nach Abkühlen auf 85°C gibt man diese Lösung portionenweise hinzu, erwärmt auf 140°C und rührt 4 Stunden bei dieser Temperatur nach.

Schliesslich wird die Pigmentsuspension nach Abkühlen auf 110°C und Zugabe von 15 ml Wasser mit ca. 5 ml Ammoniak 25-30 % auf pH 5-6,5 gestellt. Man filtriert bei 105-110°C und wäscht mit 950 ml 1,2,3-Trimethylbenzol, 1000 ml Isopropanol und anschliessend mit 2-3 Liter Wasser. Das Pigment wird bei 120°C bis zur Gewichtskonstanz getrocknet. Man erhält 75 g (0,09 Mol; 90 % d.Th.) des Pigments der Formel

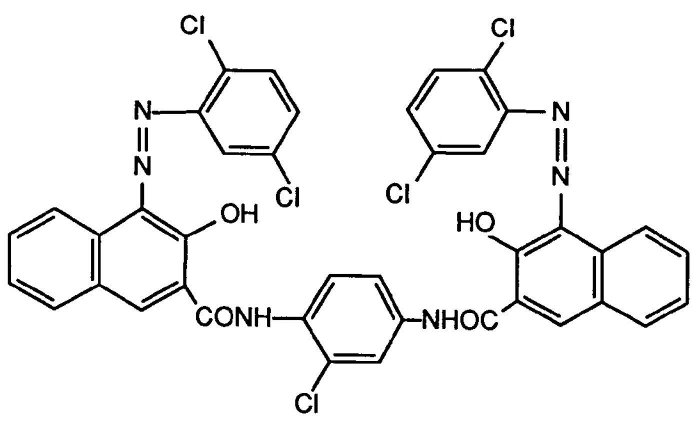

Beispiel 2:

In einem 0,35-Liter-Sulfierkolben werden 14,8 g (0,246 Mol) Isopropanol, 17,8 g (0,252 Mol) Natriumnitrit und 70 g 1,2,3-Trimethylbenzol vorgelegt. Nach Zugabe von 60 g Eis sinkt die Innentemperatur auf ca. -10°C. Sodann werden bei dieser Temperatur unter Rühren innerhalb von 40 Minuten 27,7 g (0,243 Mol) Salzsäure (32%ig) zugetropft und 15 Minuten ausgerührt. Die organische Phase des Reaktionsgemisches (= Isopropylnitrit gelöst in 1,2,3-Trimethylbenzol) wird mittels eines Schütteltrichters von der wässrigen Phase getrennt.

In einem 1-Liter-Planschliffkolben werden 230 g 1,2,3-Trimethylbenzol vorgelegt, 35,6 g (0,216 Mol) 2,5-Dichloranilin unter Rühren eingetragen und durch Erwärmen auf 40°C in Lösung gebracht. In diese dunkelbraune Lösung werden 40,6 g (0,211 Mol) 2-Hydroxy-3-naphtoesäure eingetragen und mit 80 g 1,2,3-Trimethylbenzol nachgespült. Anschliessend wird das in 1,2,3-Trimethylbenzol gelöste Isopropylnitrit zugetropft. Man erwärmt auf 50°C und lässt zwei Stunden ausrühren. Dann werden zuerst bei 50°C/130 mbar und danach bei 70°C/30 mbar insgesamt 30 g Lösungsmittel abdestilliert. Nach dem Entlasten der Apparatur mit Stickstoff und Abkühlen auf Raumtemperatur wird die dunkelrote Reaktionssuspension filtriert. Das Nutschgut (Azocarbonsäure) wird dann mit 180 g 1,2,3-Trimethylbenzol gewaschen und getrocknet.

In einem 1-Liter-Planschliffkolben werden 73,7 g (0,204 Mol) Azocarbonsäure und 0,3 g Benzyltriethylammoniumchlorid in 272 g 1,2,3-Trimethylbenzol angeschlämmt und unter Rühren auf 80°C erwärmt. Sodann tropft man 25,6 g (0,213 Mol) Thionylchlorid innerhalb von 20 Minuten zu, erwärmt auf 115°C und rührt eine Stunde. Gleichzeitig werden in einem 0,75-Liter-Sulfierkolben 318 g 1,2,3-Trimethylbenzol vorgelegt, 10,6 g (0,0981 Mol) 1,4-Phenylendiamin eingetragen und durch Erwärmen auf 130°C in Lösung gebracht. Diese Lösung wird in Portionen innerhalb von 10 Minuten in den 1-Liter-Planschliffkolben eingetragen. Man spült mit 36 g 110°C heissem 1,2,3-Trimethylbenzol. Unter Rühren wird auf 140°C erwärmt und vier Stunden ausgerührt. Schliesslich wird die Pigmentsuspension durch Eintragen einer Suspension von 6,5 g Natriumbicarbonat in 100 g 1,2,3-Trimethylbenzol neutralisiert und abfiltriert. Man wäscht mit 890 g heissem 1,2,3-Trimethylbenzol, 800 g Isopropanol und am Ende mit 2000 g Wasser. Das Pigment wird bei 100°C bis zur Gewichtskonstanz getrocknet. Man erhält 72,6 g (0,0914 Mol; 93,2 % d.Th.) des Pigments der Formel

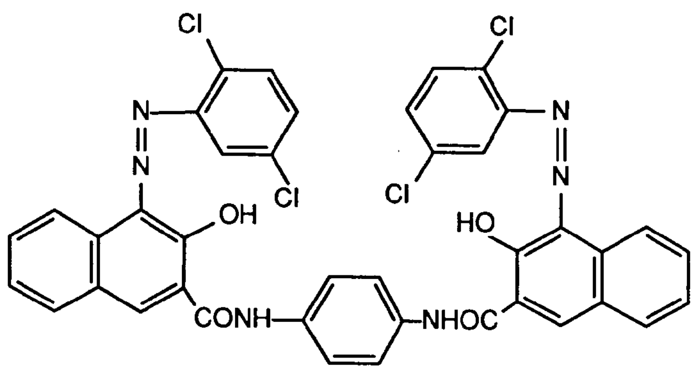

Beispiel 3:

In einem 1-Liter-Planschliffkolben werden 17,4 g (0,29 Mol) Isopropanol, 20,4 g (0,30 Mol) Natriumnitrit 100 % und 64 ml Anisol vorgelegt. Nach Zugabe von 110 g Eis sinkt die Innentemperatur auf ca. -11°C. Innerhalb von 15 Minuten lässt man unter Rühren 28 ml (0,29 Mol) Salzsäure (32%ig) zutropfen und 15 Minuten bei -5 bis 0°C ausrühren. Nach Phasentrennung wird die obere Phase (Isopropylnitril gelöst in Anisol) abgetrennt. Man extrahiert die wässrige Phase mit weiteren 50 ml Anisol. Die gesammelte organische Phase wird für die weitere Reaktion bereit gehalten.

In einem 1-Liter-Planschliffkolben werden zur Kupplung 42,6 g (0,24 Mol) 4-Chlor-2-nitroanilin (98%ig), 46,2 g (0,25 Mol) 2-Hydroxy-3-naphthoesäure sowie 330 ml Anisol vorgelegt. Nach Erwärmen auf 45°C wird zu der dünnflüssigen gelben Suspension während 30-60 Minuten bei 45-50°C die obige Isopropylnitrit-Lösung zugetropft. Man lässt die dunkle dickflüssige Suspension zwei Stunden bei 45-50°C nachrühren. Unter Vakuum (40 mbar) destilliert man 120 ml einer Mischung aus Wasser/Isopropanol/Isopropylnitrit/Anisol ab bis ca. 61°C. Nach dem Entlasten der Apparatur wird die dunkelrote Reaktionssuspension auf Raumtemperatur abgekühlt. 1 g Benzyltriethylammoniumchlorid wird zugegeben und die Masse auf 85°C geheizt. Man tropft dann innert 15 Minuten 30,8 g (0,26 Mol) Thionylchlorid bei 80-85°C hinzu, erwärmt auf 115°C und lässt eine Stunde bei 115-120°C rühren. Nach dem Abkühlen auf Raumtemperatur wird die dunkelrote Reaktionssuspension filtriert. Das Nutschgut wird dann mit 220 ml Anisol gewaschen.

Der erhaltene Nutschkuchen wird mit 380 ml Anisol, 0,7 g Benzyltriethylammoniumchlorid und 1 ml Thionylchlorid in einem 1-Liter-Planschliffkolben vorgelegt und auf 100°C geheizt. Gleichzeitig werden 14,8 g (0,10 Mol) 2-Chlor-1,4-phenylendiamin (99%ig) in 130 ml Anisol bei 110°C in einein Erlenmeyerkolben gelöst. Diese Lösung wird in Portionen innerhalb von 10 Minuten in den Planschliffkolben eingetragen. Unter Rühren wird die Masse auf 140°C erwärmt und vier Stunden ausgerührt.

Die Pigmentsuspension wird mit 230 ml Anisol vedünnt und auf 100°C abgekühlt. Die Reaktionsmasse wird mit ca. 5,0 g Natriumbicarbonat auf pH 5-6.5 eingestellt. Man filtriert bei 95-100°C und wäscht mit 1700 ml heissem Anisol, 1000 ml Isopropanol und anschliessend mit 3000 ml Wasser. Das Pigment wird bei 120°C bis zur

Gewichtskonstanz getrocknet. Man erhält 82,3 g (0,097 Mol, 80% d. Th.) des Pigments der Formel

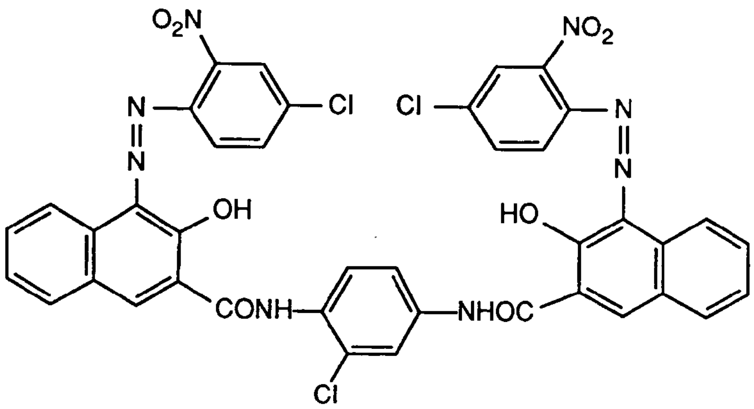

Beispiel 4:

In einem 0,75-Liter-Sulfierkolben werden bei Raumtemperatur 420,0 g Anisol vorgelegt. Unter Rühren werden 51,7 g der Bis-azocarbonsäure der Formel

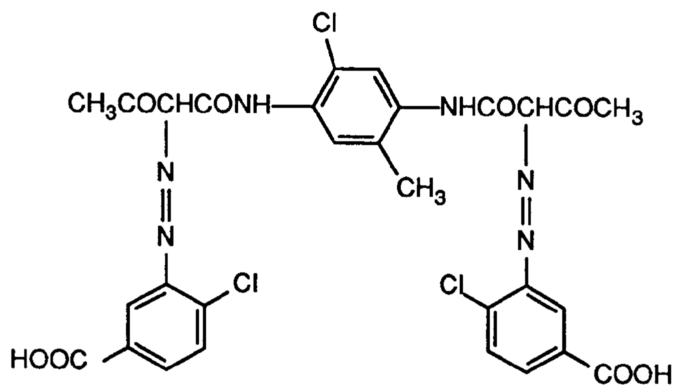

(XV)

und 1,2 g Dimethylformamid zugegeben. Anschliessend heizt man auf 80-85°C. Sobald die Innentemperatur 80°C erreicht hat, werden 39,5 g Thionylchlorid innerhalb 10 Minuten zugetropft. Dabei entstehen äquimolare Mengen an $SO_2$ und HCl, welche über eine Gasabsorbtionsapparatur entsorgt werden. Nach dem Zutropfen des Thionylchlorids erwärmt man die Reaktionssuspension auf 110-115°C und lässt 3 Stunden bei dieser Temperatur rühren, wobei das gewünschte Bis-azocarbonsäurechlorid entsteht.

Danach wird die Reaktionssuspension auf 50°C abgekühlt, bei dieser Temperatur abfiliert und mit 535,0g Anisol gewaschen, bis der Auslauf farblos und säurefrei ist. Die Ausbeute an feuchtem Bis-azocarbonsäurechlorid beträgt 131,0 g.

In einem 1,5-Liter-Planschliffkolben werden bei Raumtemperatur 480,0 g Anisol vorgelegt. Unter Rühren werden 131,0 g des feuchten Bis-aczocarbonsäurechlorids zugegeben, auf 80-85°C erwärmt und bei dieser Temperatur werden 21,9 g 2-Amino-6-chlortoluol in 100,0 g Anisol gelöst, innerhalb 15 Minuten zugetropft. Dann erhitzt man die Reaktionssuspension auf 140°C und rührt 15 Stunden bei dieser Temperatur.

Anschliessend wird die Pigmentsuspension auf 50°C abgekühlt und 476,0 g Methanol werden so zugegeben, dass die Innentemperatur bei 50°C bleibt. Dann wird der pH-Wert durch Zugabe von 4,3 g Natriummethylat (30%ig in Methanol) auf 8,0-8,5 eingestellt und das Gemisch wird 1 Stunde bei dieser Temperatur gerührt. Man filiert das Pigment bei dieser Temperatur ab, wäscht mit 369,0 g Methanol bis der Auslauf farblos ist und mit 500,0 g Wasser salzfrei und trocknet im Vakuumtrockenschrank bei 120°C bis zum Feuchtigkeitsgehalt von <1 %.

Ausbeute: ca. 63,0 g (89,6 % d.Th.) des Pigments der Formel

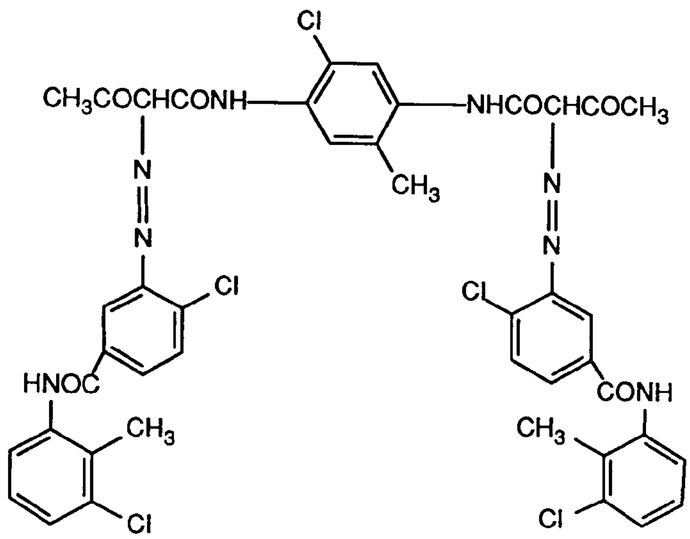

(XVI).

Beispiel 5:

In einem 0,75-Liter-Sulfierkolben werden bei Raumtemperatur 374,0 g 1,2,3-Trimethylbenzol vorgelegt. Unter Rühren werden 51,7 g der Bis-azocarbonsäure der Formel XV (wie in Beispiel 4) und 1,2 g Dimethylformamid zugegeben. Anschliessend heizt man auf 80-85°C. Sobald die Innentemperatur 80°C erreicht hat, werden 39,5 g Thionylchlorid innerhalb 10 Minuten zugetropft. Dabei entstehen äquimolare Mengen an $SO_2$ und HCl, welche über eine Gasabsorbtionsapparatur entsorgt werden. Nach dem Zutropfen des Thionylchlorids erwärmt man die Reaktionssuspension auf 130-135°C und lässt 3 Stunden bei der Temperatur rühren, wobei das gewünschte Bis-azocarbonsäurechlorid entsteht.

Danach wird die Reaktionssuspension auf 50°C abgekühlt, bei dieser Temperatur abfiltriert und mit 406,0g 1,2,3-Trimethylbenzol gewaschen, bis der Auslauf farblos und säurefrei ist. Die Ausbeute an feuchtem Bis-azocarbonsäurechlorid beträgt 131,0 g.

In einem 1,5-Liter-Planschliffkolben werden bei Raumtemperatur 574,0 g 1,2,3-Trimethylbenzol vorgelegt. Unter Rühren werden 131,0 g des feuchten Bis-azocarbonsäurechlorids zugegeben, auf 80-85°C erwärmt und bei dieser Temperatur werden 21,9 g 2-Amino-6-chlortoluol in 95,0 g 1,2,3-Trimethylbenzol gelöst, innerhalb 15 Minuten zugetropft. Dann erhitzt man die Reaktionssuspension auf 160°C und rührt 15 Stunden bei dieser Temperatur.

Anschliessend wird die Pigmentsuspension auf 50°C abgekühlt und 476,0 g Methanol werden so zugegeben, dass die Innentemperatur bei 50°C bleibt. Dann wird der pH-Wert durch Zugabe von 9,4 g Natriummethylat (30%ig in Methanol) auf 8,0-8,5 eingestellt und das Gemisch wird 1 Stunde bei dieser Temperatur gerührt. Man filtriert das Pigment bei dieser Temperatur ab, wäscht mit 399,0 g Methanol bis der Auslauf farblos ist und mit 500,0 g Wasser salzfrei und trocknet im Vakuumtrockenschrank bei 120°C bis zum Feuchtigkeitsgehalt von <1 %.

Ausbeute: ca 64,0 g (91,0 % d.Th.) des Pigments der Formel XVI (wie in Beispiel 4)

## Patentansprüche

1. Verfahren zur Herstellung von Bisazopigmenten ausgewählt aus der Bis-hydroxynaphthoylamino-benzol- und Bis-acetoacetylamino-benzol-Reihe nach an sich bekannten Methoden, dadurch gekennzeichnet, dass als Lösungsmittel 1,2,3-Trimethylbenzol oder Anisol verwendet wird.

2. Verfahren gemäss Anspruch 1 zur Herstellung von Bisazopigmenten der Formel

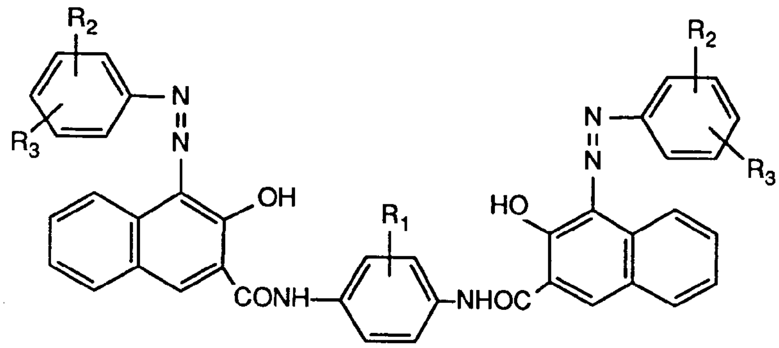

(I),

worin $R_1$ Wasserstoff, Chlor oder Methyl und $R_2$ und $R_3$, unabhängig voneinander, Chlor, Methyl oder Nitro bedeuten,
durch Umsetzung (a) von 2 Mol eines Azocarbonsäurechlorids der Formel

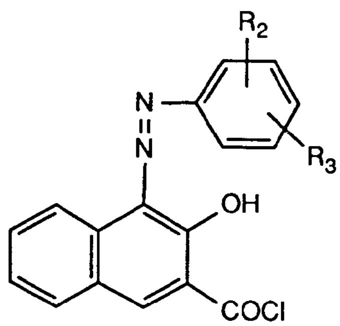

(II),

worin $R_2$ und $R_3$ die oben angegebene Bedeutung haben,
mit 1 Mol eines Diamins der Formel

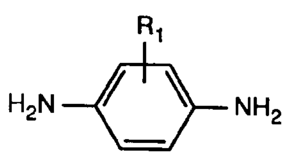

(III),

worin $R_1$ die oben angegebene Bedeutung hat,
oder der Formel

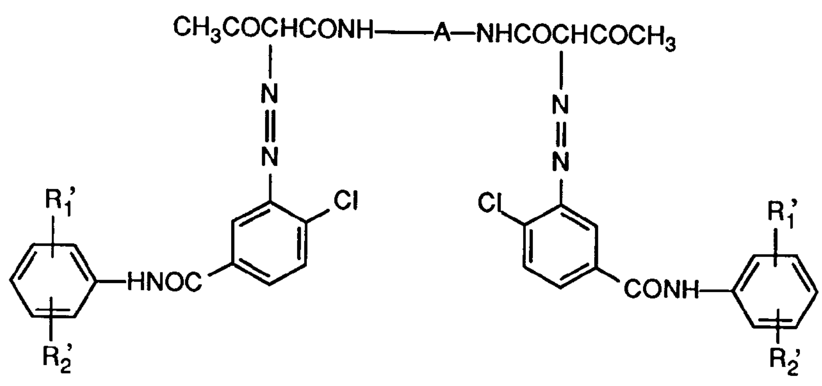

(IV),

worin A eine Gruppe

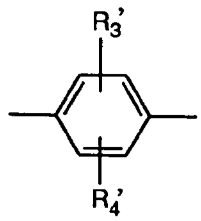

bedeutet,
worin $R'_1$ und $R'_2$ unabhängig voneinander Chlor, Methyl, Trifluormethyl, unsubstituiertes oder durch Chlor, Methyl oder Methoxy substituiertes Phenoxy bedeuten, und $R'_3$ und $R'_4$ unabhängig voneinander Chlor oder Methyl sind,
durch Umsetzung (b) von 1 Mol eines Bis-azocarbonsäurechlorids der Formel

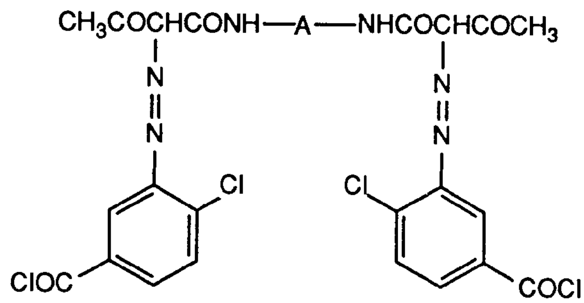

(V),

worin A die oben angegebene Bedeutung hat,
mit 2 Mol eines Amins der Formel

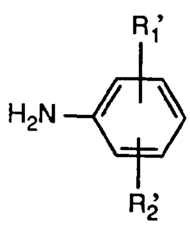

(VI),

worin $R'_1$ und $R'_2$ die oben angegebene Bedeutung haben,
dadurch gekennzeichnet, dass die Umsetzungen (a) oder (b) in Gegenwart von 1,2,3-Trimethylbenzol oder Anisol als Lösungsmittel durchgeführt werden.

**3.** Verfahren gemäss Anspruch 2 zur Herstellung von Bisazopigmenten der Formel

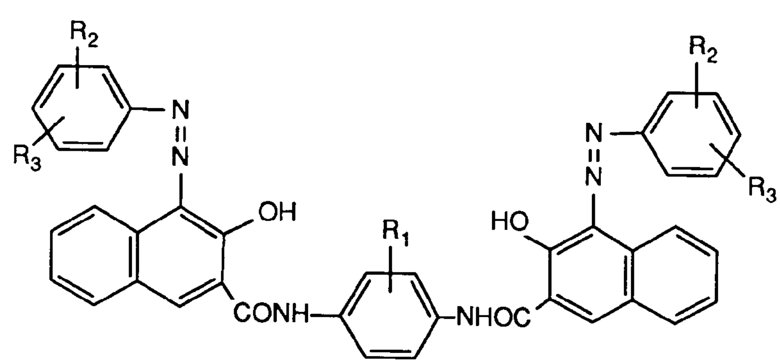

(I),

worin $R_1$ Wasserstoff, Chlor oder Methyl und $R_2$ und $R_3$, unabhängig voneinander, Chlor, Methyl oder Nitro

bedeuten,
durch Umsetzung von 2 Mol eines Azocarbonsäurechlorids der Formel

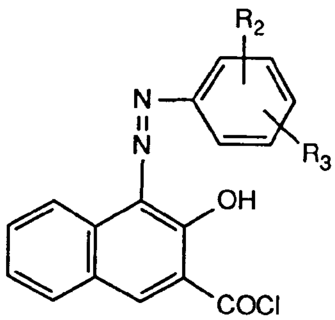

(II),

worin $R_2$ und $R_3$ die oben angegebene Bedeutung haben,
mit 1 Mol eines Diamins der Formel

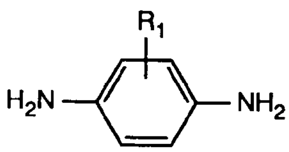

(III),

worin $R_1$ die oben angegebene Bedeutung hat.

4. Verfahren gemäss Anspruch 3, dadurch gekennzeichnet, dass man von einem der Azocarbonsäurechloride der Formeln

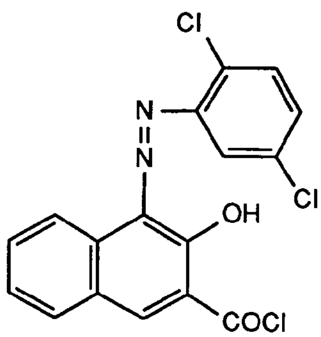

oder

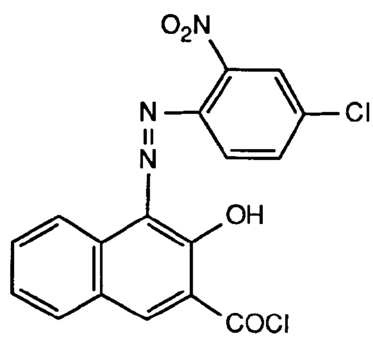

ausgeht.

5. Verfahren gemäss Anspruch 3, dadurch gekennzeichnet, dass man als Diamin p-Phenylendiamin oder 1,4-Diamino-2-chlor-benzol einsetzt.

6. Verfahren gemäss Anspruch 3, dadurch gekennzeichnet, dass man das Azocarbonsäurechlorid der Formel

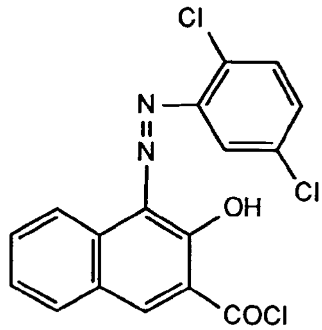

mit p-Phenylendiamin oder mit 1,4-Diamino-2-chlor-benzol kondensiert.

7. Verfahren gemäss Anspruch 3, dadurch gekennzeichnet, dass man das Azocarbonsäurechlorid der Formel

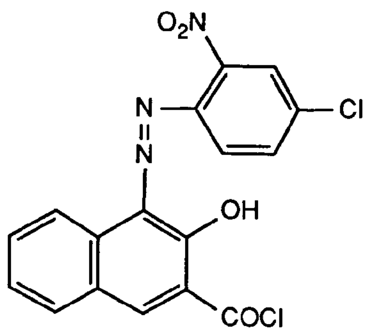

mit 1,4-Diamino-2-chlor-benzol kondensiert.

8. Verfahren gemäss Anspruch 3, dadurch gekennzeichnet, dass man als Lösungsmittel 1,2,3-Trimethylbenzol einsetzt.

9. Verfahren gemäss Anspruch 3, dadurch gekennzeichnet, dass die Kondensation bei einer Temperatur zwischen 80 und 160°C durchgeführt wird.

10. Verfahren gemäss Anspruch 3, dadurch gekennzeichnet, dass die 3- bis 10-fache Gewichtsmenge 1,2,3-Trimethylbenzol oder Anisol, bezogen auf das Azocarbonsäurechlorid eingesetzt wird.

11. Verfahren gemäss Anspruch 2 zur Herstellung von Bisazopigmenten der Formel

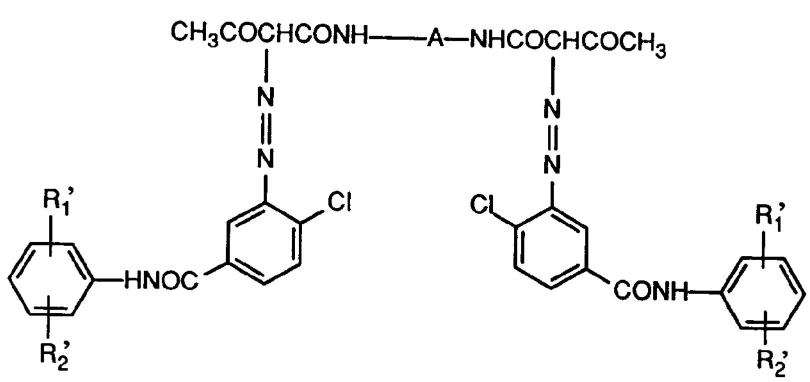

(IV),

worin A eine Gruppe

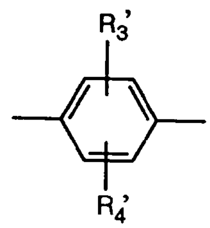

bedeutet,
worin $R'_1$ und $R'_2$ unabhängig voneinander Chlor, Methyl, Trifluormethyl, unsubstituiertes oder durch Chlor, Methyl oder Methoxy substituiertes Phenoxy bedeuten, und $R'_3$ und $R'_4$ unabhängig voneinander Chlor oder Methyl sind,
durch Umsetzung von 1 Mol eines Bis-azocarbonsäurechlorids der Formel

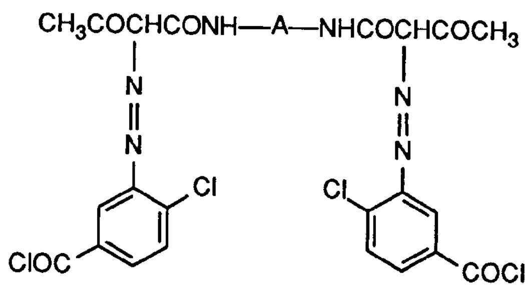

(V),

worin A die oben angegebene Bedeutung hat,
mit 2 Mol eines Amins der Formel

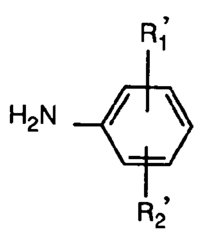

(VI),

worin $R'_1$ und $R'_2$ die oben angegebene Bedeutung haben.

12. Verfahren gemäss Anspruch 11, dadurch gekennzeichnet, dass man von einem Bis-azocarbonsäurechlorid der Formel V ausgeht, worin A eine der Gruppen

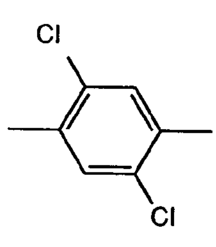

,

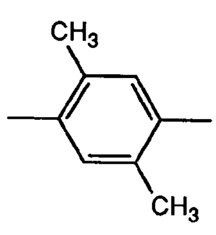

oder

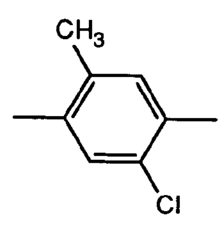

bedeutet.

13. Verfahren gemäss Anspruch 11, dadurch gekennzeichnet, dass man ein Amin der Formel VI einsetzt, worin $R'_1$ und $R'_2$ unabhängig voneinander Chlor, Methyl, Trifluormethyl oder p-Chlorphenoxy bedeuten.

14. Verfahren gemäss Anspruch 13, dadurch gekennzeichnet, dass man ein Amin der Formel

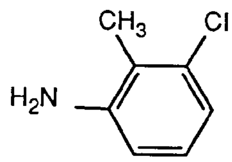 , 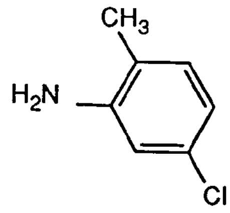 oder 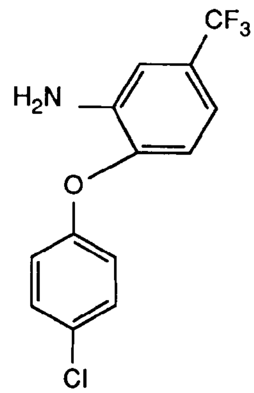

verwendet.

**15.** Verfahren gemäss Anspruch 11, dadurch gekennzeichnet, dass man ein Bis-azocarbonsäurechlorid der Formel V, worin A eine Gruppe

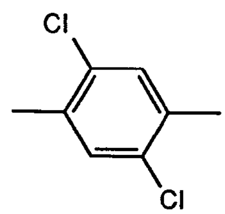

ist, mit einem Amin der Formel

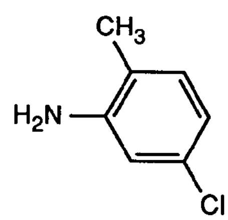

kondensiert.

**16.** Verfahren gemäss Anspruch 11, dadurch gekennzeichnet, dass man ein Bis-azocarbonsäurechlorid der Formel V, worin A eine Gruppe

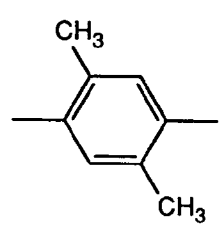

ist, mit einem Amin der Formel

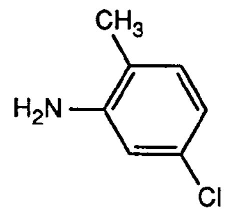

kondensiert.

**17.** Verfahren gemäss Anspruch 11, dadurch gekennzeichnet, dass man ein Bis-azocarbonsäurechlorid der Formel V, worin A eine Gruppe

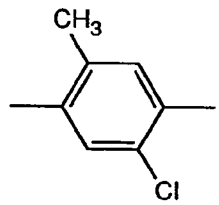

ist, mit einem Amin der Formel

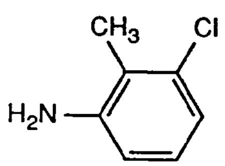

oder

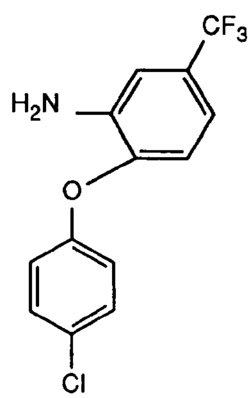

kondensiert.

**18.** Verfahren gemäss Anspruch 11, dadurch gekennzeichnet dass die Kondensation mit 1,2,3-Timethylbenzol als Lösungsmittel, bei einer Temperatur zwischen 150 und 165°C durchgeführt wird.

**19.** Verfahren gemäss Anspruch 11, dadurch gekennzeichnet dass die Kondensation mit Anisol als Lösungsmittel, bei einer Temperatur zwischen 135 und 145°C durchgeführt wird.

**20.** Verfahren gemäss Anspruch 11, dadurch gekennzeichnet dass die 8- bis 15-fache Gewichtsmenge 1,2,3-Trimethylbenzol oder Anisol, bezogen auf das Bis-azocarbonsäurechlorid eingesetzt wird.

Europäisches Patentamt

# EUROPÄISCHER RECHERCHENBERICHT

Nummer der Anmeldung

EP 92 81 0069

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-2 444 838 (VYZKUMNY USTAV ORGANICKYCH SYNTEZ)<br>* Ansprüche; Beispiele 1,3 * | 1-20 | C09B43/32<br>C09B41/00 |
| A | EP-A-0 040 173 (CIBA-GEIGY AG.)<br>* Seite 2, Absatz 2; Beispiel 2 * | 1-20 | |
| A | FR-A-2 207 167 (DAINICHISEIKA COLOR & CHEMICALS MFG. CO., LTD.)<br>* Anspruch 1; Beispiel 46 * | 1-20 | |
| A | FR-A-2 116 456 (CIBA-GEIGY AG.)<br>* Seite 7, Zeile 7 - Zeile 14; Ansprüche * | 1-20 | |

RECHERCHIERTE SACHGEBIETE (Int. Cl.5 )

C09B

Der vorliegende Recherchenbericht wurde für alle Patentansprüche erstellt

| Recherchenort | Abschlußdatum der Recherche | Prüfer |
|---|---|---|
| DEN HAAG | 09 APRIL 1992 | GINOUX C.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)